# EUROPÄISCHE PATENTSCHRIFT

(11) **EP 2 895 538 B1**
(45) Veröffentlichungstag und Bekanntmachung des Hinweises auf die Patenterteilung: **11.01.2017**
(21) Anmeldenummer: 13759527.8
(22) Anmeldetag: 10.09.2013
(51) Int. Cl.: C09K 21/14, C08J 9/00

(54) **MELAMINHARZSCHAUMSTOFF MIT ANORGANISCHEM FÜLLMATERIAL MIT HOHER DICHTE**
MELAMINE RESIN FOAM MATERIAL COMPRISING AN ANORGANIC FILLER MATERIAL HAVING A HIGH DENSITY
MOUSSE DE RÉSINE MÉLAMINIQUE CONTENANT UNE CHARGE INORGANIQUE À HAUTE DENSITÉ

(30) Priorität: 12.09.2012 EP 12184087
(43) Veröffentlichungstag der Anmeldung: 22.07.2015
(73) Patentinhaber: BASF SE, 67056 Ludwigshafen am Rhein (DE)
(72) Erfinder: STEINKE, Tobias, Heinz, 67346 Speyer (DE); FINK, Günter, 67133 Maxdorf (DE)
(86) Internationale Anmeldenummer: PCT/EP2013/068667
(87) Internationale Veröffentlichungsnummer: WO 2014/040968

(56) Entgegenhaltungen:
- WO-A1-2012/059493
- WO-A2-2012/113740
- GB-A- 1 443 024

## Beschreibung

Die vorliegende Erfindung betrifft Melaminharzschaumstoffe, Verfahren zu deren Herstellung sowie deren Verwendung.

Aus der WO 2012/059493 ist das Verschäumen von Melaminharzen mit anorganischen Füllmaterialien bekannt. Die Melamin-Formaldehyd-Schaumstoffe sind dadurch gekennzeichnet, dass sie 80 bis 98 Gew.-% eines anorganischen Füllmaterials enthalten, wobei die Gew.-% auf das Gesamtgewicht aus zur Schaumstoffherstellung eingesetztem Melamin-Formaldehyd-Vorkondensat und anorganischem Füllmaterial bezogen sind. Als anorganische Materialien werden Quarz, Olivin, Basalt, Glaskugeln, Glasfasern, Keramikkugeln, Tonmineralien, Sulfate, Carbonate, Kieselgur, Silikate, kolloidale Kieselsäure oder deren Mischungen beschrieben. Üblicherweise sind diese anorganischen Füllmaterialien feinteilig, d. h. sie weisen eine Partikelgröße < 50 µm auf. Des Weiteren weisen sie im Allgemeinen eine unregelmäßige Form und Oberflächenmorphologie auf.

Aus der EP-A-1 146 070 ist die Imprägnierung von Melamin-Formaldehyd-Schaumstoffen mit einem Ammoniumsalz und aus der WO-A-2007/23118 die Imprägnierung mit Natriumsilikat zur Verbesserung der Brandeigenschaften dieser Schaumstoffe bekannt. Die erhaltenen Schaumstoffe sind jedoch bezüglich ihrer mechanischen Eigenschaften noch verbesserungswürdig.

Aus der DE-A-10 2007 009127 sind faserverstärkte Schaumstoffe auf Basis von Melamin-Formaldehyd-Harzen mit einem Faseranteil von 0,5 bis 50 Gew.-% bekannt. Als faserförmiger Füllstoff werden Kurz- oder Langfasern aus Glas, Kohlenstoff oder Melaminharz eingesetzt.

Aus der WO-A-2009/021963 ist ein Verfahren zur Herstellung eines abrasiven Schaumstoffs auf Basis eines Melamin-Formaldehyd-Kondensationsproduktes bekannt, welches 0,01 bis 50 Gew.-% anorganische Nanopartikel bezogen auf das Gewicht des entsprechenden Vorkondensats enthält.

Der vorliegenden Erfindung lag daher die Aufgabe zugrunde, den zuvor genannten Nachteilen abzuhelfen, insbesondere Formaldehyd-Melaminharz-Schaumstoffe mit verbesserten mechanischen Eigenschaften, insbesondere bzgl. Elastizität und Druckfestigkeit, bei gleichzeitig guten Brandeigenschaften, bereitzustellen.

Die vorliegende Erfindung betrifft daher einen Melamin-Formaldehyd-Schaumstoff, enthaltend 80 bis 98 Gew.-% mindestens eines anorganischen Füllmaterials, bezogen auf das Gesamtgewicht aus zur Schaumstoffherstellung eingesetzten Melamin-Formaldehyd-Vorkondensat und mindestens einem anorganischen Füllmaterial, wobei das mindestens eine anorganische Füllmaterial eine Dichte von mindestens 3 g/cm³ aufweist und das mindestens eine anorganische Füllmaterial ausgewählt ist aus der Gruppe bestehend aus Oxiden, Sulfaten, Carbonaten und Mischungen davon.

Die vorliegende Erfindung betrifft des Weiteren ein Verfahren zur Herstellung des erfindungsgemäßen Melamin-Formaldehyd-Schaumstoffs, wobei mindestens ein Melamin-Formaldehyd-Vorkondensat, gegebenenfalls mindestens ein Lösungsmittel, gegebenenfalls mindestens eine Säure, gegebenenfalls mindestens ein Dispergiermittel, mindestens ein Treibmittel und mindestens ein anorganisches Füllmaterial mit einer Dichte von mindestens 3 g/cm³ vermischt werden, und diese Mischung bei einer Temperatur oberhalb des Siedetemperatur des mindestens einen Treibmittels verschäumt wird, sowie die Verwendung des erfindungsgemäßen Melamin-Formaldehyd-Schaumstoffs im Bauwesen, im Automobil-, Schiffs- und Schienenfahrzeugbau, dem Bau von Raumfahrzeugen oder in der Polsterindustrie.

Der erfindungsgemäße Melamin-Formaldehyd-Schaumstoff enthält erfindungsgemäß 80 bis 98 Gew.-%, bevorzugt 80 bis 95 Gew.-%, besonders bevorzugt 80 bis 90 Gew.-%, mindestens eines, beispielsweise 1 bis 10, bevorzugt 1 bis 5, besonders bevorzugt 1 bis 3, insbesondere 1 oder 2, ganz besonders bevorzugt eines anorganischen Füllmaterials mit einer Dichte von mindestens 3 g/cm³, jeweils bezogen auf das Gesamtgewicht aus zur Schaumstoffherstellung eingesetztem Melamin-Formaldehyd-Vorkondensat und mindestens einem anorganischen Füllmaterial.

Das erfindungsgemäß vorliegende mindestens eine anorganische Füllmaterial weist eine Dichte von mindestens 3 g/cm³, bevorzugt mindestens 3,5 g/cm³, besonders bevorzugt mindestens 4,0 g/cm³, auf. Die Dichte des erfindungsgemäß eingesetzten anorganischen Füllmaterials beträgt in einer bevorzugten Ausführungsform höchstens 7 g/cm³.

Das mindestens eine anorganische Füllmaterial mit einer Dichte von mindestens 3 g/cm³ ist ausgewählt aus der Gruppe bestehend aus Oxiden, z. B. Aluminium-, Magnesium, Zirkonium- und Titanoxid, Sulfaten, beispielsweise Bariumsulfat, Carbonaten, beispielsweise Bariumcarbonat, oder Mischungen aus zwei oder mehr der genannten Materialien.

Das mindestens eine anorganische Füllmaterial mit einer Dichte von mindestens 3 g/cm³ ist ausgewählt aus der Gruppe bestehend aus Oxiden, Sulfaten, Carbonaten und Mischungen davon.

In einer bevorzugten Ausführungsform weist das mindestens eine anorganische Füllmaterial mit einer Dichte von mindestens 3 g/cm³ einen mittleren Teilchendurchmesser (Z-Mittel mittels Lichtstreuung, Malvern, Fraunhoferbeugung) von 0,05 mm bis 2 mm, besonders bevorzugt 0,1 bis 1 mm, ganz besonders bevorzugt 0,1 bis 0,5 mm, insbesondere bevorzugt 0,2 bis 0,4 mm, auf.

Das erfindungsgemäß eingesetzte mindestens eine anorganische Füllmaterial weist eine Dichte von mindestens 3 g/cm³ auf. Diese erfindungsgemäße Dichte erhält das mindestens eine anorganische Füllmaterial erfindungsgemäß bevorzugt dadurch, dass es in Partikeln mit den genannten bevorzugten Größen vorliegt und mindestens ein Bindemittel enthält.

Das erfindungsgemäß eingesetzte, mindestens eine anorganische Füllmaterial kann im Allgemeinen jede Form aufweisen. Ein besonders bevorzugtes anorganisches Füllmaterial, bevorzugt mit dem oben genannten mittleren Teilchendurchmesser, liegt in Partikelform vor, besonders bevorzugt beträgt im Partikel das Verhältnis der längsten Raumachse zur kürzesten Raumachse der Partikel 2:1 bis 1:1. Erfindungsgemäß besonders bevorzugt sind zumindest teilweise sphärische, d.h. kugelförmige, anorganische Füllmaterialien.

Die vorliegende Erfindung betrifft daher bevorzugt den erfindungsgemäßen Melamin-Formaldehyd-Schaumstoff, wobei das mindestens eine anorganische Füllmaterial mit einer Dichte von mindestens 3 g/cm³ zumindest teilweise als kugelförmige Partikel vorliegt.

In einer besonders bevorzugten Ausführungsform der vorliegenden Erfindung enthält das mindestens eine anorganische Füllmaterial mit einer Dichte von mindestens 3 g/cm³ mindestens ein Bindemittel. Das bevorzugt vorliegende Bindemittel kann beispielsweise ein polymeres oder anorganisches Bindemittel sein. Das Bindemittel kann erfindungsgemäß im Wesentlichen homogen mit dem mindestens einen anorganischen Füllmaterial vermischt sein. In einer weiteren Ausführungsform kann das Bindemittel auch in einer Schicht auf dem anorganischen Füllmaterial vorliegen. Es ist auch möglich, dass das Bindemittel erfindungsgemäß im Wesentlichen homogen mit dem mindestens einen anorganischen Füllmaterial vermischt ist und gleichzeitig auch in einer Schicht auf dem anorganischen Füllmaterial vorliegt.

In einer bevorzugten Ausführungsform des erfindungsgemäßen Melamin-Formaldehyd-Schaumstoffes ist das mindestens eine Bindemittel ausgewählt aus der Gruppe bestehend aus Duroplasten, Thermoplasten, anorganischen Bindemitteln und Mischungen davon.

Die vorliegende Erfindung betrifft daher bevorzugt den erfindungsgemäßen Melamin-Formaldehyd-Schaumstoff, wobei das mindestens eine Bindemittel ausgewählt ist aus der Gruppe bestehend aus Duroplasten, Thermoplasten, anorganischen Bindemitteln und Mischungen davon.

Ein bevorzugt vorliegendes organisches Bindemittel liegt im Allgemeinen in einer Menge von 80 bis 99 Gew.-%, bevorzugt 85 bis 99 Gew.-%, besonders bevorzugt 90 bis 99 Gew.-%, jeweils bezogen auf das Gesamtgewicht aus polymerem Bindemittel und mindestens einem anorganischen Füllmaterial, vor.

Ein bevorzugt vorliegendes anorganisches Bindemittel liegt im Allgemeinen in einer Menge von 30 bis 99 Gew.-%, bevorzugt 50 bis 95 Gew.-%, besonders bevorzugt, 60 bis 95 Gew.-%, insbesondere bevorzugt 70 bis 90 Gew.-%, jeweils bezogen auf das Gesamtgewicht aus anorganischem Bindemittel und mindestens einem anorganischen Füllmaterial, vor.

Als polymeres Bindemittel kann erfindungsgemäß im Allgemeinen jedes polymere Material eingesetzt werden, dass dazu geeignet ist, das erfindungsgemäß vorliegende mindestens eine anorganische Füllmaterial zu binden.

Als polymere Bindemittel eignen sich insbesondere duroplastische Stoffe, bevorzugt ausgewählt aus der Gruppe bestehend aus Melamin-Formaldehyd-Harzen, Polyurethanharzen, Polyesterharzen oder Epoxidharzen und Mischungen davon. Diese sind dem Fachmann bekannt. Solche Harze sind beispielsweise in Encyclopedia of Polymer Science und Technology (Wiley) unter folgenden Kapiteln zu finden: a) Polyesters, unsaturated: Edition 3, Vol. 11, 2004, S. 41-64; b) Polyurethanes: Edition 3, Vol. 4. 2003, S. 26-72 und c) Epoxy resins: Edition 3, Vol. 9, 2004, S. 678-804. Des Weiteren finden sich in Ullmann's Encyclopedia of Industrial Chemistry (Wiley) folgende Kapitel: a) Polyester resins, unsaturated: Edition 6, Vol. 28, 2003, S. 65-74; b) Polyurethanes: Edition 6, Vol. 28, 2003, S. 667-722 und c) Epoxy resins: Edition 6, Vol. 12, 2003, S. 285-303. Des Weiteren können amino- oder hydroxyfunktionalisierte Polymere, insbesondere ein Polyvinylamin oder Polyvinylalkohol eingesetzt werden.

Die vorliegende Erfindung betrifft daher bevorzugt den erfindungsgemäßen Melamin-Formaldehyd-Schaumstoff, wobei das mindestens eine Bindemittel ein Duroplast ist, ausgewählt aus der Gruppe bestehend aus Melamin-Formaldehyd-Harzen, Polyurethan-Harzen, Polyester-Harzen, Epoxid-Harzen und Mischungen davon.

Des Weiteren ist es möglich thermoplastische Stoffe einzusetzen. Geeignete thermoplastische Werkstoffe sind beispielsweise Polyethylen, Polypropylen, Polyester, Polcarbonat und Polyamid, bevorzugt thermoplastische Werkstoffe mit schlechtem Brandverhalten, wie z.B. Polytetrafluorethylen (PTFE), Polysulfone (PESU), Polyetherimid (PEI) und Polyethylensulfid (PPS). In Ullmann's Encyclopedia of Industrial Chemistry (Wiley) finden sich folgende Kapitel zu den genannten thermoplastischen Materialien: a) Polyethylene, Edition 6, Vol. 28, 2003, S. 393-427; b) Polypropylene, Edition 6, Vol. 28, 2003, S. 428-461; c) Polyesters, Edition 6, Vol. 28, 2003, S. 75-102; d) Polycarbonates, Edition 6, Vol. 28, 2003, S. 55-63; e) Polyamides, Edition 6, Vol. 28, 2003, S. 25-54, f) Polymers, High-Temperature Edition 6, Vol. 28, 2003, S. 351-376.

Die vorliegende Erfindung betrifft daher bevorzugt den erfindungsgemäßen Melamin-Formaldehyd-Schaumstoff, wobei das mindestens eine Bindemittel ein Thermoplast ist, ausgewählt aus der Gruppe bestehend aus Polyethylen, Polypropylen, Polyestern, Polcarbonaten, Polyamiden und Mischungen davon.

Ebenso ist es möglich, anorganische Bindemittel ausgewählt aus der Gruppe bestehend aus Phoshaten, Silikaten, Boraten und Mischungen davon, beispielsweise Wasserglas (Woellner GmbH) oder amorphe Siliziumdioxiddispersionen (Levasil, H.C. Stark) oder Kombinationen davon, einzusetzen.

Die vorliegende Erfindung betrifft daher bevorzugt den erfindungsgemäßen Melamin-Formaldehyd-Schaumstoff, wobei das mindestens eine anorganische Bindemittel ausgewählt ist aus der Gruppe bestehend aus Phosphaten, Silikaten, Boraten und Mischungen davon.

Das mindestens eine anorganische Füllmaterial kann zur besseren Anbindung an die Schaumstruktur an seiner Oberfläche auch chemische Funktionalisierungen aufweisen. Die chemische Funktionalisierung der Oberflächen des mindestens einen anorganischen Füllmaterials ist dem Fachmann grundsätzlich bekannt und beispielsweise in WO2005/103107 beschrieben. Erfindungsgemäße, anorganische Füllmaterialien mit einer Dichte von mindestens 3 g/cm³ können beispielsweise nach dem Fachmann bekannten Methoden beschichtet werden. Dies kann beispielsweise mittels einer Sprühvorrichtung in einer Mischvorrichtung, z. B. in einem Intensivmischer, beispielsweise der Fa. Eirich, erfolgen. Dadurch wird eine homogene Benetzung der Füllmaterialien erzielt. In einer besonderen Ausführungsform lässt man das Beschichtungsmaterial vor dem Einbringen in das Melamin-Formaldehyd-Vorkondensat nicht vollständig aushärten, um die Anbindung im Schaumstoff zu erhöhen.

Das mindestens eine erfindungsgemäß eingesetzte anorganische Füllmaterial mit einer Dichte von mindestens 3 g/cm³ lässt sich auf verschiedene, dem Fachmann bekannte Wege erzeugen.

Typische Verfahren zum Erzeugen von erfindungsgemäß bevorzugten anorganischen Füllmaterialien, insbesondere als staubfreie, rieselfähige Granulate aus pulverförmigen Materialien, sind dem Fachmann bekannt, siehe zum Beispiel a) Heinze, G., Handbuch der Agglomerationstechnik, Weinheim 2000; b) Pietsch, W. B., Agglomeration Processes: Phenomena, Technologies, Equipment, Weinheim 2002, c) Serno, P. , Kleinebudde, P. , Knop, K., Granulieren: Grundlagen, Verfahren, Formulierungen, Aulendorf 2006, d) Ullmann's Encyclopedia of Industrial Chemistry (Wiley), Fertilizers, 4. Granulation, Edition 5, Vol. A10, 1987, S. 374-388.

Grundsätzlich kann die Granulierung in zwei Verfahren unterteilt werden: a) Trockengranulierung und b) Feuchtgranulierung.

Beim Trockenverfahren werden pulverförmige Feststoffe unter Druck- und/oder Temperatureinwirkung zu Granulat verarbeitet. Dies kann diskontinuierlich, z.B. in Form in einer Tablettenverpressung zu Presslingen (Direktverpressung), erfolgen. In Abhängigkeit von den Substanzeigenschaften sind noch weitere Hilfsstoffe erforderlich. Die Kornvergrößerung eines feindispersen Schüttgutes mittels Walzenkompaktoren (gegenläufige Walzen) ist ein Beispiel für ein kontinuierliches Verfahren. Durch den Verdichtungsvorgang entsteht ein flaches, tafelförmiges Agglomerat. Die Kompaktierung in Verbindung mit den nachgeschalteten Zerkleinerungsvorgängen stellt das Kompaktierungsgranulier-Verfahren dar.

Darüber hinaus können erfindungsgemäß geeignete anorganische Füllmaterialien mittels Feuchtgranulierung hergestellt werden. Dabei werden flüssige Bindemittel auf die feinpulvrigen Feststoffe aufgesprüht. Die Granulierung kann zum Beispiel mittels Roll-, Misch- Wirbelschichtverfahren erfolgen.

Das Prinzip der Wirbelschicht basiert auf dem Durchströmen einer pulverförmigen Feststoffschüttung mit einem Gas, bis sich nach Überwinden der Schwerkraft der einzelnen Teilchen ein bewegtes Bett ausbildet, das sich analog zu einem Fluid verhält. Über Sprühdüsen werden die fluidisierten Partikel mit einem Bindemittel, bevorzugt mit einem der oben genannten Bindemitteln, besonders bevorzugt mit einem duroplastischen und/oder anorganischen Bindemittel, benetzt. Nach Aufsprühen der Binderflüssigkeit haften die Partikel zur gewünschten Agglomeratgröße zusammen. Eingesprüht werden Flüssigkeiten, Schmelzen oder Suspensionen, siehe u.a. H. Uhlemann, L. Mörl, Wirbelschicht-Sprühgranulation, Berlin 2000, S. 69 bis 125.

Die Herstellung der erfindungsgemäß geeigneten anorganischen Füllmaterialien kann des Weiteren auch durch Extrusion von Polymerschmelzen, bevorzugt aus den oben genannten polymeren Bindemittel, besonders bevorzugt thermoplastische Bindemittel, mit den entsprechenden anorganischen Materialien und anschließender Granulierung, insbesondere Unterwassergranulierung (UWG), erfolgen. Die UWG geschieht beispielsweise mit rotierenden auf Hartmetallscheiben laufenden Messerköpfen. In den Scheiben sind bevorzugt Löcher angebracht, die die Grundgröße bestimmen. Die Feinregulierung der Form, des Gewichts und weiterer Parameter lässt sich durch Drehzahl, Materialdurchsatz und Temperaturen an diesem System von außen steuern, siehe auch Ullmann's Encyclopedia of Industrial Chemistry (Wiley) Plastics Processing, 1. Processing of Thermoplastics Edition 6, Vol. 27, Seiten 450 bis 486.

Die vorliegende Erfindung betrifft daher bevorzugt den erfindungsgemäßen MelaminFormaldehyd-Schaumstoff, wobei das mindestens eine anorganische Füllmaterial mittels Granulierungsverfahren, beispielsweise Trocken- oder Feuchtgranulierung, und/oder Extrusionsverfahren erhalten wird.

Der erfindungsgemäße Melamin-Formaldehyd-Schaumstoff ist im Allgemeinen ein offenzelliges Schaumstoffgerüst, welches eine Vielzahl miteinander verbundener, dreidimensional verzweigter Stege enthält, und bei denen das mindestens eine anorganische Füllmaterial mit einer Dichte von mindestens 3 g/cm³ bevorzugt zumindest teilweise in die Porenstruktur eingebettet ist. Die Partikelgröße des mindestens einen anorganischen Füllmaterials entspricht erfindungsgemäß bevorzugt dem mittleren Porendurchmesser der Schaumstruktur (d₅₀-Wert, zahlengemittelt, bestimmt mittels Licht-oder Elektronenmikroskopie in Verbindung mit Bildauswertung). Im Rahmen der vorliegenden Erfindung bedeutet "zumindest teilweise" wenigstens 60%, bevorzugt wenigstens 70%, besonders bevorzugt wenigstens 80%, ganz besonders bevorzugt wenigstens 90%.

Die vorliegende Erfindung betrifft daher bevorzugt den erfindungsgemäßen Melamin-Formaldehyd-Schaumstoff, wobei das mindestens eine anorganische Füllmaterial mit einer Dichte von mindestens 3 g/cm³ zumindest teilweise in die Porenstruktur eingebettet ist.

Das mindestens eine anorganische Füllmaterial kann in dieser bevorzugten Ausführungsform in idealer Weise in die Porenstruktur des offenzelligen Schaumstoffs eingebunden und von allen Seiten des Porengerüstes fixiert werden. Eine derartige erfindungsgemäße Struktur kann durch nachträgliches Imprägnieren des Schaumstoffs mit anorganischen Füllmaterialien gemäß Stand der Technik nicht erzeugt werden, da hierfür die Teilchengröße der anorganischen Füllstoffe immer so gewählt werden muss, dass die Teilchengröße kleiner als die Porengröße des Schaumstoffs ist, um eine Verteilung im gesamten Schaumstoff zu gewährleisten.

Das zur Herstellung des erfindungsgemäßen Melamin-Formaldehyd-Schaumstoffs eingesetzte Melamin-Formaldehyd-Vorkondensat weist im Allgemeinen ein Molverhältnis von Formaldehyd zu Melamin von 5:1 bis 1,3:1, bevorzugt 3,5:1 bis 1,5:1, auf.

Das Melamin-Formaldehyd-Kondensationsprodukt kann neben Melamin auch 0 bis 50 Gew.-%, bevorzugt 0 bis 40 Gew.-%, besonders bevorzugt 0 bis 30 Gew.-%, insbesondere 0 bis 20 Gew.-%, jeweils bezogen auf die Summe aus Melamin und gegebenenfalls weiteren Duroplastbildnern, anderer Duroplastbildner enthalten. Zusätzlich vorliegende Duroplastbildner sind beispielsweise ausgewählt aus der Gruppe bestehend aus alkyl- und arylsubstituiertem Melamin, Harnstoff, Urethanen, Carbonsäureamiden, Dicyandiamiden, Guanidin, Sulfurylamiden, Sulfonsäureamiden, aliphatischen Aminen, Glykolen, Phenolen, Derivate und Mischungen davon.

Das Melamin-Formaldehyd-Kondensationsprodukt kann des Weiteren neben Formaldehyd auch 0 bis 50 Gew.-%, bevorzugt 0 bis 40 Gew.-%, besonders bevorzugt 0 bis 30 Gew.-%, insbesondere 0 bis 20 Gew.-%, jeweils bezogen auf die Summe aus Formaldehyd und gegebenenfalls weiteren Aldehyden, anderer Aldehyde einkondensiert enthalten. Zusätzlich vorliegende Aldehyde sind beispielsweise ausgewählt aus der Gruppe bestehend aus Acetaldehyd, Trimethylolacetaldehyd, Acrolein, Benzaldehyd, Furfural, Glyoxal, Glutaraldehyd, Phthalaldehyd, Terephthalaldehyd und Mischungen davon. Weitere Einzelheiten über Melamin/Formaldehyd-Kondensationsprodukte finden sich in Houben-Weyl, Methoden der organischen Chemie, Band 14/2, 1963, Seiten 319 bis 402.

Erfindungsgemäß bevorzugt werden unmodifizierte Melamin-Formaldehyd-Vorkondensate eingesetzt.

Die erfindungsgemäßen Melamin-Formaldehyd-Schaumstoffe lassen sich beispielsweise durch Vermischen von mindestens einem Melamin-Formaldehyd-Vorkondensat, gegebenenfalls mindestens einem Lösungsmittel, gegebenenfalls mindestens einer Säure, gegebenenfalls mindestens einem Dispergiermittel, mindestens einem Treibmittel und mindestens einem erfindungsgemäßen, anorganischen Füllmaterial, und Verschäumen dieser Mischung bei einer Temperatur oberhalb des Siedetemperatur des mindestens einen Treibmittels, herstellen.

Die vorliegende Erfindung betrifft daher auch ein Verfahren zur Herstellung eines Melamin-Formaldehyd-Schaumstoffes, wobei mindestens ein Melamin-Formaldehyd-Vorkondensat, gegebenenfalls mindestens ein Lösungsmittel, gegebenenfalls mindestens eine Säure, gegebenenfalls mindestens ein Dispergiermittel, mindestens ein Treibmittel und mindestens ein anorganisches Füllmaterial mit einer Sichte von mindestens 3 g/cm³ vermischt werden, und diese Mischung bei einer Temperatur oberhalb des Siedetemperatur des mindestens einen Treibmittels verschäumt wird.

Als Melamin-Formaldehyd-Vorkondensate eignen sich eigens hergestellte, siehe Übersichtsschriften: a) W. Woebcken, Kunststoffhandbuch 10. Duroplaste, München, Wien 1988, b) Encyclopedia of Polymer Science and Technology, 3. Aufl., Vol.1, Kap. Amino Resins, S. 340 bis 370, 2003 c) Ullmann's Encyclopedia of Industrial Chemistry, 6. Aufl., Vol. 2, Kap. Amino Resins, S. 537 bis 565. Weinheim 2003, oder handelsübliche Vorkondensate der beiden Komponenten, Melamin und Formaldehyd. Die Melamin-Formaldehyd-Vorkondensate weisen in der Regel ein Molverhältnis von Formaldehyd zu Melamin 5 : 1 bis 1,3 : 1, bevorzugt 3,5 : 1 bis 1,5 : 1 auf.

Eine bevorzugte Verfahrensvariante zur Herstellung des erfindungsgemäßen Schaumstoffes umfasst die Stufen:
(1) Herstellen einer Suspension enthaltend ein Melamin-Formaldehyd-Vorkondensat des herzustellenden Schaumstoffs, mindestens ein anorganisches Füllmaterial mit einer Dichte von mindestens 3 g/cm³ und gegebenenfalls weitere Zusatzkomponenten,
(2) Aufschäumen des Vorkondensates durch Erhitzen der Suspension aus Schritt (1) auf eine Temperatur oberhalb der Siedetemperatur des Treibmittels, und
(3) Trocknen des aus Schritt (2) erhaltenen Schaumstoffs.

Die einzelnen Verfahrensschritte und die verschiedenen Variationsmöglichkeiten werden nachfolgend näher ausgeführt.

Es können bei der Herstellung des Melamin-Formaldehyd-Vorkondensates Alkohole, beispielsweise Methanol, Ethanol oder Butanol zugesetzt werden, um teilweise oder vollständig veretherte Kondensate zu erhalten. Durch die Bildung der Ethergruppen können die Löslichkeit des Melamin-Formaldehyd-Vorkondensates und die mechanischen Eigenschaften des vollständig ausgehärteten Materials beeinflusst werden.

Gegebenenfalls werden in Schritt (1) als weitere Zusatzkomponenten Dispergiermittel bzw. Emulgatoren eingesetzt. Als Dispergiermittel bzw. Emulgator können anionische, kationische und nicht ionische Tenside sowie Mischungen davon eingesetzt werden.

Geeignete anionische Tenside sind beispielsweise Diphenylenoxidsulfonate, Alkan- und Alkylbenzolsulfonate, Alkylnaphthalinsulfonate, Olefinsulfonate, Alkylethersulfonate, Fettalkoholsulfate, Ethersulfate, α-Sulfofettsäureester, Acylaminoalkansulfonate, Acylisothionate, Alkylethercarboxylate, N-Acylsarcosinate, Alkyl- und Alkylether-phosphate.

Als kationische Emulgatoren können z.B. Alkyltriammoniumsalze, Alkylbenzyldimethylammoniumsalze und Alkylpyridiniumsalze eingesetzt werden.

Als nichtionische Tenside können Alkylphenolpolyglykolether, Fettalkoholpolyglykolether, Fettsäurepolyglykol-ether, Fettsäurealkanolamide, Ethylenoxid/-Propylenoxid-Blockcopolymere, Aminoxide, Glycerin-fettsäureester, Sorbitanester und Alkylpolyglykoside verwendet werden.

Die Dispergiermittel bzw. Emulgatoren können in Mengen von 0,2 bis 5 Gew.-%, bezogen auf das Melamin-Formaldehyd-Vorkondensat, eingesetzt werden.

Die Dispergiermittel bzw. Emulgatoren und/oder Schutzkolloide können im Prinzip zu einem beliebigen Zeitpunkt zur Rohdispersion gegeben werden, sie können jedoch auch bereits in dem Lösungsmittel vorhanden sein.

Prinzipiell können bei dem erfindungsgemäßen Verfahren sowohl physikalische als auch chemische Treibmittel verwendet werden, siehe Encyclopedia of Polymer Science and Technology, Vol. I, 3. Aufl., Kapitel Additives, Seite 203 bis 218, 2003. Dabei richtet sich die Menge des Treibmittels in der Mischung in der Regel nach der erwünschten Dichte des Schaumstoffs.

Als physikalische Treibmittel eignen sich beispielsweise Kohlenwasserstoffe, wie Pentan, Hexan, halogenierte, insbesondere chlorierte und/oder fluorierte Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol, n- oder iso-Propanol, Ether, Ketone und Ester, beispielsweise Ameisensäuremethylester, Ameisensäureethylester, Essigsäuremethylester oder Essigsäureethylester, in flüssiger Form oder Luft, Stickstoff und Kohlendioxid als Gase.

Als chemische Treibmittel eignen sich beispielsweise Isocyanate im Gemisch mit Wasser, wobei als wirksames Treibmittel Kohlendioxid freigesetzt wird. Ferner sind Carbonate und Bicarbonate im Gemisch mit Säuren geeignet, welche ebenfalls Kohlendioxid erzeugen. Auch geeignet sind Azoverbindungen, beispielsweise Azodicarbonamid.

In einer bevorzugten Ausführungsform der Erfindung enthält die Mischung zusätzlich wenigstens ein Treibmittel. Dieses Treibmittel liegt in der Mischung in einer Menge von bevorzugt 0,5 bis 60 Gew.-%, besonders bevorzugt 1 bis 40 Gew.-%, ganz besonders bevorzugt 1,5 bis 30 Gew.-% bezogen auf das Melamin-Formaldehyd-Vorkondensat, vor. Es wird bevorzugt ein physikalisches Treibmittel mit einem Siedepunkt zwischen 0 und 80°C zugesetzt.

Als Härter können saure Verbindungen eingesetzt werden, die die Weiterkondensation des Melaminharzes katalysieren. Die Menge dieser Härter beträgt in der Regel 0,01 bis 20 Gew.-%, bevorzugt 0,05 und 5 Gew.-%, jeweils bezogen auf das Vorkondensat. Geeignete saure Verbindungen sind anorganische und organische Säuren, zum Beispiel ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

In einer weiteren Ausführungsform enthält die Mischung neben dem Melamin-Formaldehyd-Vorkondensat des herzustellenden Schaumstoffes und dem mindestens einen anorganischen Füllmaterial, auch einen Emulgator sowie gegebenenfalls einen Härter und ein Treibmittel.

In einer weiteren Ausführungsform ist die Mischung frei von weiteren Zusatzstoffen. Für manche Zwecke kann es jedoch günstig sein, 0,1 bis 20 Gew.-%, bevorzugt 0,1 bis 10 Gew.-%, bezogen auf das Melamin-Formaldehyd-Vorkondensat, an üblichen, von den anorganischen Füllmaterialien verschiedenen Zusatzstoffen, wie Farbstoffe, Flammschutzmittel, UV-Stabilisatoren, Mittel zur Herabsetzung der Brandgastoxizität oder zur Förderung der Verkohlung, Duftstoffe, optische Aufheller oder Pigmente zuzusetzen. Diese Zusatzstoffe sind bevorzugt homogen in dem Schaumstoff verteilt.

Als Pigmente können beispielsweise die gängigen organischen Pigmente eingesetzt werden. Diese Pigmente können zuvor mit dem mindestens einen anorganischen Füllmaterial vermengt werden.

Für einen guten Brandschutz sollte der Anteil an weiteren organischen Bestandteilen neben dem Melamin-Formaldehyd-Harz in dem Schaumstoff möglichst gering sein. Erfindungsgemäß bevorzugt sind Schaumstoffe, bei denen der Anteil an weiteren organischen Bestandteilen so gering ist, dass sie den Brandtest A2 nach DIN EN 13501-1 bestehen.

Im nachfolgenden Schritt (2) des erfindungsgemäßen Verfahrens erfolgt das Aufschäumen des Vorkondensates in der Regel durch Erhitzen der Suspension des Melamin-Formaldehyd-Vorkondensates und des mindestens einen anorganischen Füllmaterials, um einen Schaumstoff zu erhalten, der mindestens ein anorganisches Füllmaterial mit einer Dichte von mindestens 3 g/cm³ enthält. Dazu wird die Suspension in der Regel auf eine Temperatur oberhalb des Siedepunktes des verwendeten Treibmittels erwärmt und in einer geschlossenen Form verschäumt.

Bevorzugt kann der Energieeintrag durch elektromagnetische Strahlung erfolgen, beispielsweise durch Hochfrequenzbestrahlung mit 5 bis 400 kW, bevorzugt 5 bis 200 kW, besonders bevorzugt 9 bis 120 kW pro Kilogramm der eingesetzten Mischung in einem Frequenzbereich von 0,2 bis 100 GHz, bevorzugt 0,5 bis 10 GHz. Als Strahlungsquelle für dielektrische Strahlung sind Magnetrone geeignet, wobei mit einem oder mehreren Magnetronen gleichzeitig bestrahlt werden kann.

Die hergestellten Schaumstoffe werden abschließend getrocknet, wobei im Schaumstoff verbliebenes Wasser und Treibmittel entfernt wird.

Eine Nachbehandlung kann auch zur Hydrophobierung des Schaumstoffs erfolgen. Bevorzugt werden hierbei hydrophobe Beschichtungsmittel eingesetzt, die eine hohe Temperaturstabilität und eine geringe Brennbarkeit aufweisen, beispielsweise Silikone, Silikonate oder fluorierte Verbindungen.

Bei dem beschriebenen Verfahren entstehen bevorzugt Schaumstoffblöcke bzw. -platten hergestellt, die zu beliebigen Formen zurechtgeschnitten werden können.

Die Schaumstoffblöcke bzw. -platten können optional in einem weiteren Verfahrensschritt thermokomprimiert werden. Die Thermokomprimierung als solche ist dem Fachmann bekannt und beispielsweise in WO 2007/031944, EP-A 451 535, EP-A 111 860 und US-B 6,608,118 beschrieben. Durch die Thermokomprimierung kann oftmals eine noch bessere Fixierung der anorganischen Füllmaterialien an die offenzellige Schaumstruktur erreicht werden.

Die Dichte des erfindungsgemäßen Schaumstoffs beträgt im Allgemeinen 3 bis 100 kg/m³, bevorzugt 10 bis 100 kg/m³, besonders bevorzugt 15 bis 80 kg/m³, besonders bevorzugt 25 bis 75 kg/m³.

Der erfindungsgemäße Schaumstoff, bevorzugt erhältlich nach dem erfindungsgemäßen Verfahren, hat bevorzugt eine offenzellige Struktur mit einer Offenzelligkeit, gemessen nach DIN ISO 4590, von mehr als 50%, insbesondere mehr als 80%.

Der mittlere Porendurchmesser liegt bevorzugt im Bereich von 50 bis 1.000 µm, insbesondere im Bereich von 100 bis 500 µm (d₅₀-Wert, zahlengemittelt, bestimmt mittels Licht-oder Elektronenmikroskopie in Verbindung mit Bildauswertung).

Der erfindungsgemäße Schaumstoff ist bevorzugt elastisch. Die Melamin-Formaldehyd-Schaumstoffe mit hohen anorganischen Anteilen von 80 bis 98 Gew. % erfüllen im Allgemeinen den Brandtest A2 gemäß DIN EN 13501-1.

Der nach dem erfindungsgemäßen Verfahren erhältliche Schaumstoff kann auf vielfältige Weise zur Wärme- und Schalldämmung im Bauwesen und im Automobil-, Schiffs- und Schienenfahrzeugbau, dem Bau von Raumfahrzeugen oder in der Polsterindustrie eingesetzt werden, beispielsweise zur Wärmedämmung im Hausbau oder als schalldämmendes Material, z. B. in Automobilen, Flugzeugen, Bahnen, Schiffen, etc. in Fahrtgastzellen oder im Motorraum oder zur Bepolsterung von Sitz- und Liegeflächen sowie für Rücken- und Armlehnen.

Die vorliegende Erfindung betrifft daher auch die Verwendung eines erfindungsgemäßen Melamin-Formaldehyd-Schaumstoffes im Bauwesen, im Automobil-, Schiffs- und Schienenfahrzeugbau, dem Bau von Raumfahrzeugen oder in der Polsterindustrie.

Vorzugsweise liegen Anwendungsfelder in Bereichen, die eine hohe Temperaturstabilität und geringe Entflammbarkeit voraussetzen, beispielsweise in Porenbrennern. Geeignet ist das Material auch zur Isolierung im Umfeld starker Strahlung, die organische Materialien langfristig zersetzt, beispielsweise in Atomkraftwerken. Ferner kann das Material auch als "Schwamm", in der Reinigungsindustrie für in der Reinigung von Flächen z. B. in Form von Schwämmen oder getränkt mit Reinigungsmitteln aller Art eingesetzt werden.

Für bestimmte Anwendungsbereiche kann es vorteilhaft sein, die Oberfläche der erfindungsgemäßen Schaumstoffe mit einer dem Fachmann grundsätzlich bekannten Kaschierung oder Laminierung zu versehen. Solche Kaschierungen oder Laminierungen können beispielsweise unter weitgehender Erhaltung der akustischen Eigenschaften mit sogenannten "offenen" Systemen, wie beispielweise Lochplatten erfolgen, oder aber auch mit "geschlossenen" Systemen, beispielsweise Folien oder Platten aus Kunststoff, Metall oder Holz.

Die erfindungsgemäßen Schaumstoffe weisen eine verbesserte Kombination aus Brandeigenschaften und mechanischen Eigenschaften auf.

### Beispiele:

### Verwendete Normen und Messverfahren:

DIN EN 13501-1 - Klassifizierung von Bauprodukten und Bauarten zu ihrem Brandverhalten:
Diese Europäische Norm legt die Verfahren zur Klassifizierung des Brandverhaltens von Bauprodukten einschließlich der Produkte innerhalb von Bauteilen fest.
Ein Bauprodukt, das für die Klasse A2 vorgesehen ist, muss entweder nach EN ISO 1182 oder EN ISO 1716 geprüft werden. Zusätzlich müssen alle Bauprodukte, die für die Klasse A2 vorgesehen sind, nach EN 13823 geprüft werden.

EN ISO 1716 - Prüfverfahren zur Verbrennungswärme:
Dieses Prüfverfahren bestimmt die potentielle maximale Wärmefreisetzung eines Bauprodukts bei vollständiger Verbrennung, ohne Berücksichtigung seiner praktischen Anwendung. Das Prüfverfahren ist relevant für die Klassen A1 und A2. Das Prüfverfahren ermöglicht sowohl die Bestimmung des Brennwertes als auch die Bestimmung des Heizwertes.

EN ISO 1182 - Nichtbrennbarkeitsprüfung:
Diese Prüfung stellt fest, welche Bauprodukte keinen oder keinen bedeutenden Beitrag zu einem Brand leisten, ohne Berücksichtigung ihrer praktischen Anwendung. Das Prüfverfahren ist relevant für die Klassen A1 und A2.

EN 13823 - Prüfverfahren zum SBI (Single Burning Item):
Dieses Prüfverfahren bewertet den potentiellen Beitrag eines Bauprodukts zu einem sich entwickelnden Brand bei einer Brandsituation, die einen einzeln brennenden Gegenstand (Single Burning Item, SBI) in einer Raumecke nahe an diesem Bauprodukt simuliert. Das Prüfverfahren ist relevant für die Klassen A2, B, C und D.

Die Brandklasse A2 in den nachfolgenden (Vergleichs-)Beispielen wurde gemäß EN ISO 1716 und EN 13823 bestimmt.

Mechanische Eigenschaften, Elastizität:
Alle Stempeldruckmessungen zur Beurteilung der mechanischen Güte der Formaldehyd-Melaminharz-Schaumstoffe erfolgten nach US-A-4 666 948. Dazu wurde ein zylindrischer Stempel mit einem Durchmesser von 8 mm und einer Höhe von 10 cm in eine zylindrische Probe mit dem Durchmesser von 11 cm und einer Höhe von 5 cm in Schäumrichtung bei einem Winkel von 90° gedrückt bis die Probe reißt. Die Durchreißkraft [N], im Folgenden auch Stempeldruckwert genannt, gibt Auskunft über die Güte des Schaumstoffs.

### Vergleichsbeispiel A

Herstellung eines Melamin-Formaldehyd-Schaumstoffes ohne Füllmaterial nach WO-A-2009/021963:
75 Gew.-Teile eines sprühgetrockneten Melamin-Formaldehyd-Vorkondensates (Mol-verhältnis 1:3) wurden in 25 Gew.-Teilen Wasser gelöst, 3 Gew.-% Ameisensäure, 2 Gew.-% eines Na-C₁₂/C₁₄-Alkylsulfats, 38 Gew.-% Pentan, wobei die Gew.-% jeweils bezogen sind auf das Vorkondensat, zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der Melamin-Formaldehyd-Schaumstoff hat eine Dichte von 3,5 g/l und einen Stempeldruckwert von 19,7 N. Der Schaumstoff erfüllt die Anforderungen an die Brandklasse A2 nach DIN EN 13501-1 nicht.

### Vergleichsbeispiel B

Herstellung eines Melamin-Formaldehyd-Schaumstoffes mit 77,5 Gew.-%, bezogen auf das Gesamtgewicht aus zur Schaumstoffherstellung eingesetztem Melamin-Formaldehyd-Vorkondensat und anorganischem Füllmaterial, feinteiliges Bariumsulfat mit einer Dichte von 4,5 g/cm³ als Füllmaterial:
75 Gew.-Teile eines sprühgetrockneten Melamin-Formaldehyd-Vorkondensates (Mol-verhältnis 1:3) wurden in 25 Gew.-Teilen Wasser gelöst, 3 Gew.-% Ameisensäure, 2 Gew.-% eines Na-C₁₂/C₁₄-Alkylsulfats, 38 Gew.-% Pentan, wobei die Gew.-% jeweils bezogen sind auf das Vorkondensat, und 258 Gew.-Teile Bariumsulfat (Type Blanc Fixe F Teilchengrößenverteilung ("TGV") im Bereich von 0,001 bis 0,045 mm, mittlerer Teilchendurchmesser 0,020 mm, Sachtleben Chemie GmbH) zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der spröde Melamin-Formaldehyd-Schaumstoff hat eine Dichte von 18 g/l und einen Stempeldruckwert von 5,8 N. Der Schaumstoff erfüllt die Anforderungen an die Brandklasse A2 nach DIN EN 13501-1 nicht.

### Beispiel C

Herstellung eines Melamin-Formaldehyd-Schaumstoffes mit 80,0 Gew.-%, bezogen auf das Gesamtgewicht aus zur Schaumstoffherstellung eingesetztem Melamin-Formaldehyd-Vorkondensat und anorganischem Füllmaterial, feinteiliges Bariumsulfat mit einer Dichte von 4,5 g/cm³ als Füllmaterial:
75 Gew.-Teile eines sprühgetrockneten Melamin-Formaldehyd-Vorkondensates (Mol-verhältnis 1:3) wurden in 25 Gew.-Teilen Wasser gelöst, 3 Gew.-% Ameisensäure, 2 Gew.-% eines Na-C₁₂/C₁₄-Alkylsulfats, 38 Gew.-% Pentan, wobei die Gew.-% jeweils bezogen sind auf das Vorkondensat, und 300 Gew.-Teile Bariumsulfat (Type Blanc Fixe F Teilchengrößenverteilung ("TGV") im Bereich von 0,001 bis 0,045 mm, mittlerer Teilchendurchmesser 0,020 mm, Sachtleben Chemie GmbH) zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der spröde Melamin-Formaldehyd-Schaumstoff hat eine Dichte von 25 g/l und einen Stempeldruckwert von 4,2 N. Der Schaumstoff erfüllt die Anforderungen an die Brandklasse A2 nach DIN EN 13501-1.

### Beispiel 1 (erfindungsgemäß)

Herstellung eines Melamin-Formaldehyd-Schaumstoffes mit 80,0 Gew.-%, bezogen auf das Gesamtgewicht aus zur Schaumstoffherstellung eingesetztem Melamin-Formaldehyd-Vorkondensat und anorganischem Füllmaterial, Bariumsulfat/Melamin-Formaldehyd-Vorkondensat als anorganisches Füllmaterial mit einer Dichte von 4,2 g/cm³.
90 Gew.-% Bariumsulfat (Type Blanc Fixe F, Sachtleben Chemie) wurde mit 10 Gew.-% eines sprühgetrockneten Melamin-Formaldehyd-Vorkondensates (Molverhältnis 1:3) mittels Agglomeration im Wirbelschichtverfahren hergestellt. Die Granulationsexperimente wurden mit einer Wirbelschicht-Sprühgranulationsanlage mit einem Durchmesser von 230 mm durchgeführt. Die Eindüsung des Binders erfolgte von oben in ein flaches Bett (ca. 10 - 40 mm Betthöhe). Es wurden Bariumsulfatgranulate mit einer Größe von 0,050 - 0,350 mm (mittlerer Teilchendurchmesser 0,200 mm) erhalten.

Die Durchführung des Beispiels erfolgte analog Beispiel C. Jedoch wurden 300 Gew.-Teile Granulat aus Bariumsulfat/ Melamin-Formaldehyd-Vorkondensat (mittlerer Teilchendurchmesser 0,200 mm) eingesetzt.

Der Melamin-Formaldehyd-Schaumstoff hat eine Dichte von 26 g/l und einen Stempeldruckwert von 21,1 N. Der Schaumstoff erfüllt die Anforderungen an die Brandklasse A2 nach DIN EN 13501-1.

## Patentansprüche

1. Melamin-Formaldehyd-Schaumstoff, enthaltend 80 bis 98 Gew.-% mindestens eines anorganischen Füllmaterials, bezogen auf das Gesamtgewicht aus zur Schaumstoffherstellung eingesetztem Melamin-Formaldehyd-Vorkondensat und mindestens einem anorganischen Füllmaterial, **dadurch gekennzeichnet, dass** das mindestens eine anorganische Füllmaterial eine Dichte von mindestens 3 g/cm³ aufweist, und das mindestens eine anorganische Füllmaterial ausgewählt ist aus der Gruppe bestehend aus Oxiden, Sulfaten, Carbonaten und Mischungen davon.

2. Melamin-Formaldehyd-Schaumstoff nach Anspruch 1, **dadurch gekennzeichnet, dass** das mindestens eine anorganische Füllmaterial einen mittleren Teilchendurchmesser (Z-Mittel mittels Lichtstreuung, Malvern, Fraunhoferbeugung) von 0,05 bis 2 mm, bevorzugt 0,1 bis 1 mm, besonders bevorzugt 0,2 bis 0,4 mm, aufweist.

3. Melamin-Formaldehyd-Schaumstoff nach Anspruch 1 oder 2, **dadurch gekennzeichnet, dass** das mindestens eine anorganische Füllmaterial mindestens ein Bindemittel enthält.

4. Melamin-Formaldehyd-Schaumstoff nach Anspruch 3, **dadurch gekennzeichnet, dass** das mindestens eine Bindemittel ausgewählt ist aus der Gruppe bestehend aus Duroplasten, Thermoplasten, anorganischen Bindemitteln und Mischungen davon.

5. Melamin-Formaldehyd-Schaumstoff nach Anspruch 4, **dadurch gekennzeichnet, dass** das mindestens eine Bindemittel ein Duroplast ist ausgewählt aus der Gruppe bestehend aus Melamin-Formaldehyd-Harzen, Polyurethan-Harzen, Polyester-Harzen, Epoxidharzen und Mischungen davon.

6. Melamin-Formaldehyd-Schaumstoff nach Anspruch 4, **dadurch gekennzeichnet, dass** das mindestens eine Bindemittel ein Thermoplast ist ausgewählt aus der Gruppe bestehend aus Polyethylen, Polypropylen, Polyestern, Polycarbonaten, Polyamiden und Mischungen davon.

7. Melamin-Formaldehyd-Schaumstoff nach Anspruch 4, **dadurch gekennzeichnet, dass** das mindestens eine Bindemittel ein anorganisches Bindemittel ist ausgewählt aus der Gruppe bestehend aus Phosphaten, Silikaten, Boraten und Mischungen davon.

8. Melamin-Formaldehyd-Schaumstoff nach einem der Ansprüche 1 bis 7, **dadurch gekennzeichnet, dass** das mindestens eine anorganische Füllmaterial zumindest teilweise als kugelförmige Partikel vorliegt.

9. Melamin-Formaldehyd-Schaumstoff nach einem der Ansprüche 1 bis 8, **dadurch gekennzeichnet, dass** das mindestens eine anorganische Füllmaterial zumindest teilweise in die Poren des Melamin-Formaldehyd-Schaumstoff eingebettet ist.

10. Melamin-Formaldehyd-Schaumstoff nach einem der Ansprüche 1 bis 9, **dadurch gekennzeichnet, dass** das mindestens eine anorganische Füllmaterial mittels Granulierungsverfahren- und/oder Extrusionsprozessen erhalten wird.

11. Verfahren zur Herstellung eines Melamin-Formaldehyd-Schaumstoffes nach einem der Ansprüche 1 bis 10, **dadurch gekennzeichnet, dass** mindestens ein Melamin-Formaldehyd-Vorkondensat, gegebenenfalls mindestens ein Lösungsmittel, gegebenenfalls mindestens eine Säure, gegebenenfalls mindestens ein Dispergiermittel, mindestens ein Treibmittel und mindestens ein anorganisches Füllmaterial mit einer Dichte von mindestens 3 g/cm³ vermischt werden, und diese Mischung bei einer Temperatur oberhalb des Siedetemperatur des mindestens einen Treibmittels verschäumt wird.

12. Verwendung eines Melamin-Formaldehyd-Schaumstoffes nach einem der Ansprüche 1 bis 10 im Bauwesen, im Automobil-, Schiffs- und Schienenfahrzeugbau, dem Bau von Raumfahrzeugen oder in der Polsterindustrie.

## Claims

1. A melamine-formaldehyde foam comprising from 80% to 98% by weight of at least one inorganic filling material, based on the total weight of the at least one inorganic filling material plus melamine-formaldehyde precondensate used for foam production, wherein the at least one inorganic filling material has a density of at least 3 g/cm³, and the at least one inorganic filling material is selected from the group consisting of oxides, sulfates, carbonates and mixtures thereof.

2. The melamine-formaldehyde foam according to claim 1 wherein the at least one inorganic filling material has an average particle diameter (Z-average via light scattering, Malvern, Fraunhofer diffraction) of 0.05 to 2 mm, preferably 0.1 to 1 mm and more preferably 0.2 to 0.4 mm.

3. The melamine-formaldehyde foam according to claim 1 or 2 wherein the at least one inorganic filling material comprises at least one binder.

4. The melamine-formaldehyde foam according to claim 3 wherein the at least one binder is selected from the group consisting of thermosets, thermoplastics, inorganic binders and mixtures thereof.

5. The melamine-formaldehyde foam according to claim 4 wherein the at least one binder is a thermoset selected from the group consisting of melamine-formaldehyde resins, polyurethane resins, polyester resins, epoxy resins and mixtures thereof.

6. The melamine-formaldehyde foam according to claim 4 wherein the at least one binder is a thermoplastic selected from the group consisting of polyethylene, polypropylene, polyesters, polycarbonates, polyamides and mixtures thereof.

7. The melamine-formaldehyde foam according to claim 4 wherein the at least one binder is an inorganic binder selected from the group consisting of phosphates, silicates, borates and mixtures thereof.

8. The melamine-formaldehyde foam according to any one of claims 1 to 7 wherein the at least one inorganic filling material is at least partly present as spherical particles.

9. The melamine-formaldehyde foam according to any one of claims 1 to 8 wherein the at least one inorganic filling material is at least partly embedded into the pores of the melamine-formaldehyde foam.

10. The melamine-formaldehyde foam according to any one of claims 1 to 9 wherein the at least one inorganic filling material is obtained via pelletization process and/or extrusion operations.

11. A process for producing a melamine-formaldehyde foam according to any one of claims 1 to 10, which comprises at least one melamine-formaldehyde precondensate, optionally at least one solvent, optionally at least one acid, optionally at least one dispersant, at least one blowing agent and at least one inorganic filling material having a density of at least 3 g/cm³ being mixed and foaming this mixture at a temperature above the boiling temperature of the at least one blowing agent.

12. The use of a melamine-formaldehyde foam according to any one of claims 1 to 10 in building construction, automobile, ship and track vehicle construction, the construction of spacecraft or in the upholstery industry.

## Revendications

1. Mousse de mélamine-formaldéhyde, contenant 80 à 98 % en poids d'au moins un matériau de remplissage inorganique, par rapport au poids total du pré-condensat de mélamine-formaldéhyde utilise pour la fabrication de la mousse et dudit au moins un matériau de remplissage inorganique, **caractérisé en ce que** ledit au moins un matériau de remplissage inorganique présente une densité d'au moins 3 g/cm³, et ledit au moins un matériau de remplissage inorganique est choisi dans le groupe constitué par les oxydes, les sulfates, les carbonates et leurs mélanges.

2. Mousse de mélamine-formaldéhyde selon la revendication 1, **caractérisée en ce que** ledit au moins un matériau de remplissage inorganique présente un diamètre de particule moyen (moyenne Z par diffusion de lumière, Malvern, diffraction de Fraunhofer) de 0,05 à 2 mm, de préférence de 0,1 à 1 mm, de manière particulièrement préférée de 0,2 à 0,4 mm.

3. Mousse de mélamine-formaldéhyde selon la revendication 1 ou 2, **caractérisée en ce que** ledit au moins un matériau de remplissage inorganique contient au moins un liant.

4. Mousse de mélamine-formaldéhyde selon la revendication 3, **caractérisée en ce que** ledit au moins un liant est choisi dans le groupe constitué par les duroplastes, les thermoplastes, les liants inorganiques et leurs mélanges.

5. Mousse de mélamine-formaldéhyde selon la revendication 4, **caractérisée en ce que** ledit au moins un liant est un duroplaste, choisi dans le groupe constitué par les résines de mélamine-formaldéhyde, les résines de polyuréthane, les résines de polyester, les résines d'époxyde et leurs mélanges.

6. Mousse de mélamine-formaldéhyde selon la revendication 4, **caractérisée en ce que** ledit au moins un liant est un thermoplaste, choisi dans le groupe constitué par le polyéthylène, le polypropylène, les polyesters, les polycarbonates, les polyamides et leurs mélanges.

7. Mousse de mélamine-formaldéhyde selon la revendication 4, **caractérisée en ce que** ledit au moins un liant est un liant inorganique, choisi dans le groupe constitué par les phosphates, les silicates, les borates et leurs mélanges.

8. Mousse de mélamine-formaldéhyde selon l'une quelconque des revendications 1 à 7, **caractérisée en ce que** ledit au moins un matériau de remplissage inorganique se présente au moins partiellement sous la forme de particules sphériques.

9. Mousse de mélamine-formaldéhyde selon l'une quelconque des revendications 1 à 8, **caractérisée en ce que** ledit au moins un matériau de remplissage inorganique est incorporé au moins partiellement dans les pores de la mousse de mélamine-formaldéhyde.

10. Mousse de mélamine-formaldéhyde selon l'une quelconque des revendications 1 à 9, **caractérisée en ce que** ledit au moins un matériau de remplissage inorganique est obtenu par des procédés de granulation et/ou d'extrusion.

11. Procédé de fabrication d'une mousse de mélamine-formaldéhyde selon l'une quelconque des revendications 1 à 10, **caractérisé en ce que** ledit au moins un pré-condensat de mélamine-formaldéhyde, éventuellement au moins un solvant, éventuellement au moins un acide, éventuellement au moins un dispersant, au moins un agent gonflant et au moins un matériau de remplissage inorganique ayant une densité d'au moins 3 g/cm³ sont mélangés, et ce mélange est moussé à une température supérieure à la température d'ébullition dudit au moins un agent gonflant.

12. Utilisation d'une mousse de mélamine-formaldéhyde selon l'une quelconque des revendications 1 à 10 dans des bâtiments, dans la construction d'automobiles, de navires et véhicules ferroviaires, dans la construction de véhicules spatiaux ou dans l'industrie des rembourrages.
